# EUROPÄISCHE PATENTSCHRIFT

(11) **EP 0 925 565 B1**
(45) Veröffentlichungstag und Bekanntmachung des Hinweises auf die Patenterteilung: **06.06.2001**
(21) Anmeldenummer: 97941937.1
(22) Anmeldetag: 14.08.1997
(51) Int. Cl.: G08G 1/0968

(54) **VERFAHREN ZUR STEUERUNG DES TRANSPORT- UND REISEVERKEHRS**
TRANSPORT AND TOURIST TRAFFIC MANAGEMENT SYSTEM
SYSTEME DE GESTION DU TRAFIC DE TRANSPORT ET DU TRAFIC TOURISTIQUE

(30) Priorität: 09.09.1996 DE 19636379
(43) Veröffentlichungstag der Anmeldung: 30.06.1999
(73) Patentinhaber: DaimlerChrysler AG, 70567 Stuttgart (DE)
(72) Erfinder: GÜNTHER, Christian, D-81827 München (DE)
(86) Internationale Anmeldenummer: EP9704456
(87) Internationale Veröffentlichungsnummer: WO9810396

(56) Entgegenhaltungen:
- EP-A- 0 333 330
- WO-A-90/02391
- WO-A-92/14215
- WO-A-95/21435
- DE-A- 4 220 963
- US-A- 4 954 958

## Beschreibung

Die Erfindung betrifft ein Verfahren zur Steuerung des Transport- und Reiseverkehrs, bei dem die unter vorwählbaren Gesichtspunkten optimierte Route zwischen Start und Zielpunkt auf der Grundlage von gespeicherten allgemeinen Informationen über die Knoten eines Verkehrsnetzes mit Hilfe eines Rechners ermittelt und zur Verfügung gestellt wird.

Es sind verschiedene derartige Verfahren bekannt. Sie beruhen im wesentlichen auf Datensammlungen, die - in der Regel auf CD-ROM - die Daten eines Verkehrsnetzes, beispielsweise eines Straßen-, Bahn- oder Flugnetzes enthalten und einem Rechner, der die günstigste Route zwischen zwei oder gegebenenfalls mehreren Punkten des jeweiligen Netzes ermittelt. Dabei werden bestimmte Vorgaben, wie beispielsweise Preis, Schnelligkeit, Weglänge oder dergleichen berücksichtigt. Der Benutzer gibt den Startpunkt (Ort, Straße) und den Zielpunkt ein und erhält einen entsprechenden Routenplan.

Die WO-A-9521435 beschreibt ein solches Verfahren zur Steuerung des Transport- und Reiseverkehrs, bei dem die unter vorwählbaren Gesichtspunkten optimierte Route zwischen Startpunkt und Zielpunkt auf der Grundlage von gespeicherten allgemeinen Informationen über die Knoten eines Verkehrsnetzes mit Hilfe eines Rechners ermittelt und zur Verfügung gestellt wird, wobei individuelle Informationen über die Erreichbarkeit des exakten Zielpunktes vom Startpunkt und von den Knoten des allgemeinen Routen-Netzes her gesammelt, gespeichert und aktualisiert werden und diese individuellen Informationen zur rechnerischen Optimierung der Route mitverwendet werden.

In der Praxis hat es sich aber gezeigt, daß weit mehr Parameter berücksichtigt werden müssen, um einen optimalen Routenvorschlag zu erzeugen. So ist es z. B. von Interesse, ob der Reisende Gepäck zu transportieren hat oder nicht. Ferner sind Knoten der üblichen Verkehrsnetze verhältnismäßig grobmaschig verteilt, so daß man beispielsweise zwar innerhalb einer Stadt mit dem kleinsten Element "Straße", aber beispielsweise innerhalb eines Landes nur mit dem kleinsten Element "Stadtteil" arbeiten kann. Ferner enthalten die üblichen Routenplaner keine Informationen über zeitlich begrenzte Baustellen, die den Zugang zum Ziel auf dem vorgeschlagenen Weg unmöglich machen können. Schließlich enthalten sie keine verkehrsnetzübergreifenden Informationen wie z. B. die, daß das Ziel zwar an einer Bushaltestelle und an einer Durchgangsstraße liegt, daß aber der Bus nur im Berufsverkehr fährt und zu dieser Gelegenheit die Straße völlig verstopft ist. Ferner sind sie nicht in der Lage, dem Besucher auf Anfrage ein Ziel zu nennen, das beispielsweise die Eigenschaft hat, ein geöffneter Biergarten zu sein, den er vor 20 Uhr mit den öffentlichen Verkehrsmitteln erreichen kann und von dem aus er nach 23 Uhr mit den öffentlichen Verkehrsmitteln noch heimfahren kann.

Es ist das Ziel der Erfindung, ein Verfahren zu schaffen, das es ermöglicht, alle relevanten Informationen für die Verbindungsmöglichkeiten zwischen einem exakten Startpunkt und einem ggf. vorzuschlagenden exakten Zielpunkt bereitzustellen und für die Erstellung eines optimalen Routenplanes zu verwerten.

Ferner wird das Ziel verfolgt, einen möglichst großen Anteil an der Gesamtmobilität effizient und umweltverträglich so abzuwickeln, daß alle verfügbaren öffentlichen und privaten Verkehrsmittel und -systeme optimal genutzt und mit ihren Stärken eingesetzt werden. Dies schließt neben dem Automobil auch alle schienengebundenen Nah- und Fernverkehrsmittel und den Luftverkehr ein. Teil des neuen Ansatzes ist ein intuitiv zu nutzendes Kommunikationskonzept, das die leichte Zugänglichkeit zu diesem System durch die Nutzer sichert.

Diese Aufgabe wird durch die Maßnahmen gemäß dem kennzeichnenden Teil des Anspruchs 1 gelöst.

Weitere Einzelheiten der Erfindung ergeben sich aus den Unteransprüchen und der Beschreibung, in der die Erfindung anhand der Zeichnung erörtert wird. Dabei zeigen
- Fig. 1: schematisch eine erste Codierungsmöglichkeit für die Daten,
- Fig. 2: schematisch eine zweite Codierungsmöglichkeit für die Daten unter Verwendung einer bereits vorhandenen Identifikation,

Grundlage für das Verfahren nach der Erfindung ist Definition und Zuordnung eines individuellen Verkehrscodes zu Privatpersonen, Firmen, Institutionen und Behörden, mit dessen Hilfe individuelle Routenplanungen unter Nutzung aller im speziellen Falle verfügbaren Verkehrsträger durchgeführt, dem anfragenden Nutzer angeboten und dann realisiert werden.

Der Verkehrscode, eine zum Beispiel dreistellige Zahlenfolge, ist eine zusätzliche Identifizierung und ergänzt die Telefonnummer, Faxnummer und e-Mail-Adresse um eine verkehrsspezifische Information und wird entweder über die traditionellen Medien oder on-line den Interessenten zugänglich gemacht.

Der Verkehrscode kann auf verschiedene Weise definiert werden:

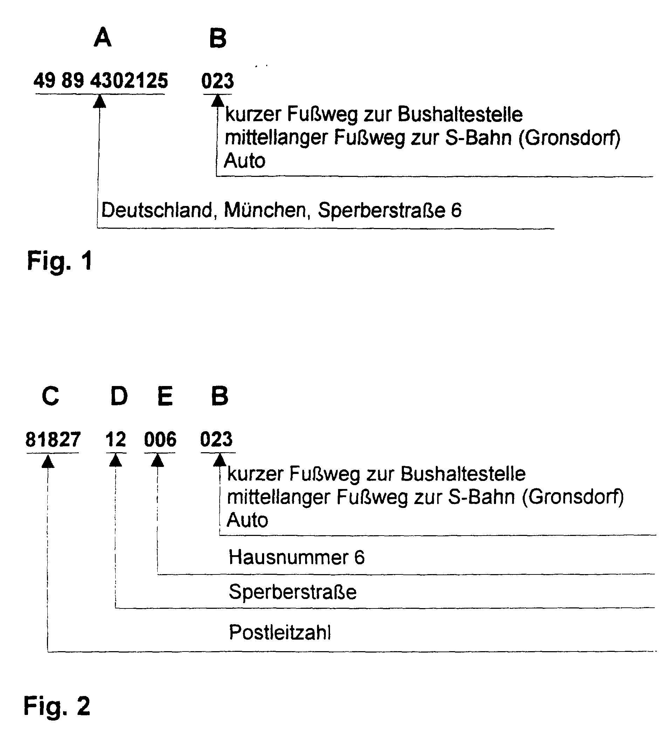

Gemäß Figur 1 besteht der Verkehrscode einfach aus der Telefonnummer und der Anbindungsangabe.

Dabei enthält die Gruppe A die Telefonnummer samt Ländercode und damit die dazugehörende Adresse "Deutschland, München, Sperberstraße 6", die Gruppe B hingegen in codierter Form die Angaben über die Verkehrsanbindung, beispielsweise
- 0: kurzer Fußweg zur Bushaltestelle
- 2: mittellanger Fußweg zur S-Bahn (Gronsdorf)
- 3: Zufahrt mit Auto möglich

- ...: sowie weitere Codierungen für Parkmöglichkeiten, Einschränkungen der Zufahrtswege, Geschäftsöffnungszeiten und dergleichen.

Beim Ausführungsbeispiel nach Figur 2 besteht der Verkehrscode aus eine Zahlenfolge mit vier Gruppen C, D, E und B. Diese bedeuten:
- C: Postleitzahl
- D: Zahlencode für die Straße "Sperberstraße"
- E: Hausnummer "6"
- B: Zahlencode der nutzbaren Verkehrsanbindungen des Eintragers wie im Beispiel nach Figur 1.

Der Verkehrscode kann aber auch aus Fax- oder e-Mail-Adresse plus Anbindungsangabe oder jeder anderen Kombination von Orts- und Anbindungsangabe bestehen.

Das Entscheidende für das erfindungsgemäße Verfahren ist die Zuordnung einer verkehrlichen Anbindungsinformation zu einem Ortscode, der vorteilhaft - wie oben beschrieben - eine bereits vorhandene Identifikation wie die Telefonnummer ist.

Die Nutzung des Verkehrscodes erfolgt ausschließlich über den geplanten Zweck der Reise. Damit ist es für den Anfragenden nicht mehr nötig, zu wissen, wo sein Ziel ist. Er muß lediglich den Wunsch äußern, daß er etwas erledigen, kaufen, besprechen oder sehen will. Wie er zum Ziel findet, erfährt er vom Rechner.

Der Nutzer ermittelt den Verkehrscode seines Zieles über Medien wie die "Yellow Pages" oder Werbung und gibt den Code beispielsweise über Telefon an den zentralen Vernetzungsrechner ein. Ein weiterer wichtiger Nutzungsbereich des Verkehrscodes sind neue On-line-Dienste, die über das Internet angeboten werden und verkehrliche Dienstleistungen wie Routenfindung, Buchung von öffentlichen Verkehrsmitteln so mit Produkt- und Leistungsangeboten verknüpfen, daß der Endnutzer nur angeben muß, welches Angebot er nutzen möchte. Die Angabe der für ihn bequemsten Route zum Anbieter übernimmt dann der On-line-Dienst unter Nutzung des Verkehrscodes, der dem Angebot zugeordnet ist.

Der Rechner erkennt automatisch den Verkehrscode des anfragenden Nutzers und ermittelt aus den beiden nun zur Verfügung stehenden Verkehrscodes die Routingaufgabe, löst diese unter Nutzung der dem Rechner zur Verfügung stehenden aktuellen Informationen über die öffentlichen Verkehrsmittel und die aktuelle Verkehrslage, bucht notwendige Parkplätze, Zug-, Bus-, Taxiverbindungen usw. und gibt das Ergebnis an den anfragenden Nutzer via Fax, on-line-Dienst oder andere Medien dergestalt aus, daß damit auch eine Berechtigung der Nutzung von öffentlichen Verkehrsmitteln erteilt wird. Kosten werden vom Konto via Einzugsermächtigung abgebucht. Somit erhält der Nutzer nicht nur einen Routenplan, sondern komplette Reisepapiere.

Der Routenplan kann auch auf ein Navigationssystem überspielt werden, so daß der Benutzer sich das Verfolgen desselben spart und beispielsweise durch das Zielführungssystem seines Autos zum ermittelten Ziel geführt wird.

In weiterer Ausbildung der Erfindung kann bei beweglichen Zielen, beispielsweise einem Funktelefon, bei Bedarf eine Aktualisierung des anzusteuernden Zieles dergestalt erfolgen, daß der Standort des Ziels ermittelt und der Routenplan entsprechend ausgestellt oder korrigiert wird. Die Standortermittlung kann beispielsweise durch einen Anruf beim Funktelefon erfolgen, das seinerzeit automatisch die aktuellen, mit Hilfe eines GPS-Gerätes ermittelten Koordinaten durchgibt, sofern sein Benutzer dem zustimmt.

Die Aktualisierung des Anbindungsteils B des Verkehrscodes erfolgt zweckmäßig durch den zugeordneten Teilnehmer selbst, da er nicht nur über die lokalen Verhältnisse und deren Änderungen am besten informiert ist, sondern auch das größte Interesse daran hat, daß er unproblematisch zu erreichen ist.

Das erfindungsgemäße Verfahren ist auch zur Lösung weiterer Aufgaben geeignet.

Für einen Teilbereich der Mobilität definiert der Reisezweck direkt die Anforderungen an die Durchführung von Reisen und von Transporten. Damit ist es möglich, die Angabe des präzisen Ziels einer Reise zu vermeiden; die Reise oder der Transport wird nur als eine abgeleitete Folge eines Erledigungswunsches aufgefaßt. Der Reisezweck rückt wieder in den Mittelpunkt, nicht die Reise selbst.

Das erfindungsgemäße System fordert daher vom Nutzer nur die Angabe des präzisen Reisezwecks ("Ich will einkaufen bei ...," "Ich möchte regelmäßig zu meiner Arbeitsstelle fahren", "Ich will in ... meinen Urlaub verbringen", "Ich muß meinen Paß verlängern lassen", "Ich habe am Donnerstag um 16:00 ein Meeting mit der Firma ... in ..." usw.). Eine genaue Kenntnis des Orts oder der Lage des Reiseziels ist für die Buchung nicht erforderlich.

Kern des Konzepts für das erfindungsgemäße Verfahren ist die Zuordnung von "Verkehrscodes" zu Anbietern, Firmen, Geschäften usw. auf der einen und zu den Nutzern auf der anderen Seite. Dies ist im Sinne der Ausdehnung der "Yellow Pages", die heute Telefon und Fax, manchmal e-Mail enthalten, zu einer neuen Art von elektronischen Yellow Pages zu verstehen, in denen die Eintragungen zusätzlich zu den Kommunikationsangaben jetzt den dem erfindungsgemäßen Verfahren entsprechenden Verkehrscode enthalten. Auch die Einträge der Telefonbücher enthalten dann zweckmäßig zusätzlich zu den Telefonanschlüssen den Verkehrscode.

Mit dem erfindungsgemäßen Verfahren wird nun im Hintergrund die Aufgabe gelöst, unter Nutzung von Datenbanken und der aktuellen bzw. vorhergesagten Verkehrslage die beste Verbindung zwischen zwei Verkehrscodes, dem Code des Eingebers und den eingegebenen Code, zu ermitteln, die Reise zu organisieren, zu buchen und die Durchführung zu veranlassen.

Die Verknüpfungsmöglichkeit von Kommunikationsangaben und Verkehrscodes erschließt völlig neue Möglichkeiten der Informationsverarbeitung, so daß die Kommunikationsschnittstelle des neuen Systems nicht nur zur Reiseorganisation und -durchführung sondern vorab auch zur Erledigung von Auswahl-, Vergleichs und Evaluierungs-Prozessen genutzt werden könnte (Beispiel: "Wo finde ich einen Fernseher 16x9 für unter DM 2000.-?").

Das erfindungsgemäße Verfahren nutzt einen Transport-Integrator, der - unterstützt von entsprechend mächtigen und dynamisierten Datenbanken - in der Lage ist, aus der Zweckangabe und dem Ort der Eingabe des Erledigungswunsches automatisch die Lokalisierung und die günstigste Verbindung durch Nutzung aller zur Verfügung stehenden Nah- und Fernverkehrsmittel zu errechnen, die Buchung zu erledigen, den Reisenden mit den entsprechenden Dokumentationen zu versehen und auch die Reise zu organisieren.

Das Gesamtsystem ist so konzipiert, daß eine schrittweise Einführbarkeit und Erweiterbarkeit möglich ist. Darüber hinaus liefert das System auch präzise Hinweise über die Dynamisierung von Routen, Frequenzen und Haltepunkten der beteiligten Verkehrssysteme und nutzt das private Automobil im notwendigen Umfang.

Die Kommunikation mit dem Reisenden erfolgt über eine einfache und intuitiv zu bedienende Kommunikationsschnittstelle, die keine erhöhten Anforderungen an die Konzentration und Intelligenz des Nutzers stellt. Hierzu eignet sich ein Fernseher mit einer Set-Top-Box, die auch ein Datenausgabemedium enthält, und einem einfach zu bedienenden Eingabe-, Auswahl- und Quittiergerät. Darüber hinaus eignet sich das Verfahren besonders für Internet-Online-Dienste und die Internet-kompatiblen Endgeräte wie PC's, Laptops, Personal Digital Assistants und andere persönlich oder im Fahrzeug mitführbare Kommunikationsgeräte.

## Patentansprüche

1. Verfahren zur Steuerung des Transport- und Reiseverkehrs, bei dem die unter vorwählbaren Gesichtspunkten optimierte Route zwischen Startpunkt und Zielpunkt auf der Grundlage von gespeicherten allgemeinen Informationen über Knoten eines Verkehrsnetzes mit Hilfe eines Rechners ermittelt und zur Verfügung gestellt wird, wobei individuelle Informationen über die Erreichbarkeit des exakten Zielpunktes vom Startpunkt und von den Knoten des allgemeinen Routennetzes her gesammelt, gespeichert und aktualisiert werden,
dadurch gekennzeichnet,
daß diese individuellen Informationen zur rechnerischen Optimierung der Route und der Art des zu wählenden Verkehrsmittels mitverwendet werden, wobei der exakte Zielpunkt entsprechend einer vom Benutzer eingegebenen Spezifikation vom Rechner ausgewählt und vorgeschlagen wird.

2. Verfahren nach Anspruch 1,
dadurch gekennzeichnet,
daß die individuellen Informationen codiert einer bereits bestehenden individuellen Kennung des Zieles hinzugefügt werden.

3. Verfahren nach Anspruch 2,
dadurch gekennzeichnet,
daß als bestehende Kennung die Telefon- oder die Telefaxnummer verwendet werden.

4. Verfahren nach Anspruch 2,
dadurch gekennzeichnet,
daß als bestehende Kennung die e-Mail-Adresse verwendet wird.

5. Verfahren nach Anspruch 2,
dadurch gekennzeichnet,
daß als bestehende Kennung die Postleitzahl verwendet wird.

6. Verfahren nach einem der vorhergehenden Ansprüche,
dadurch gekennzeichnet,
daß die Routenplanung über einen Online-Dienst durchgeführt und daß die Route zwischen exaktem Startpunkt und exaktem Zielpunkt vom Rechner ermittelt und dem Anfragenden elektronisch weiterverwertbar oder als Hardcopy oder per Telefax übermittelt wird.

7. Verfahren nach einem der vorhergehenden Ansprüche,
dadurch gekennzeichnet,
daß für die Ermittlung der optimalen Route zusätzlich die aktuelle oder die vorhergesagte Verkehrslage verwendet wird.

8. Verfahren nach einem der vorhergehenden Ansprüche,
dadurch gekennzeichnet,
daß die Routenplanung beim Anfragenden direkt auf ein Navigationssystem überspielt wird.

9. Verfahren nach einem der vorhergehenden Ansprüche,
dadurch gekennzeichnet,
daß der ausgewählte Zielpunkt direkt beim Anfragenden auf ein Navigationssystem überspielt wird.

10. Verfahren nach einem der vorhergehenden Ansprüche,
dadurch gekennzeichnet,
daß bei beweglichen Zielpunkten deren momentaner Aufenthaltsort durch Ortung oder Anrufe im Telefon-Funknetz bestimmt und aktualisiert wird.

11. Verfahren nach Anspruch 7,
dadurch gekennzeichnet,
daß zur genauen Bestimmung des Aufenthaltsortes über das Telefon-Funknetz die Koordinaten des Aufenthaltsortes und des Zielpunktes über ein GPS-Navigationsgerät bestimmt und über das Funktelefon übermittelt werden.

## Claims

1. Method for the management of transport and travel communications, in which the route between the starting point and destination, optimised in terms of pre-selectable aspects on the basis of stored general information on the nodes of a route network, is determined with the aid of a computer and made available, such that individual data on the attainability of the exact destination point from the starting point and from the nodes of the general route network are collected, stored and updated,
**characterised in that**
the said individual data are used for computerised optimisation of the route and the type of transport method to be selected, such that the exact destination point is selected and proposed by the computer in accordance with a specification input by the user.

2. Method according to Claim 1,
**characterised in that**
the individual data in coded form are added to an already existing individual destination identification code.

3. Method according to Claim 2,
**characterised in that**
the telephone or telefax number is used as the existing identification code.

4. Method according to Claim 2,
**characterised in that**
the e-mail address is used as the existing identification code.

5. Method according to Claim 2,
**characterised in that**
the postcode is used as the existing identification code.

6. Method according to any of the preceding claims
**characterised in that**
the route planning is carried out via an on-line service and the route between the exact starting and destination points is determined by the computer and communicated to the interrogator in a form that can be electronically processed further, or as hard copy, or by telefax.

7. Method according to any of the preceding claims
**characterised in that**
to determine the optimum route, the current or predicted traffic situation is additionally used.

8. Method according to any of the preceding claims
**characterised in that**
the route plan is re-recorded by the interrogator directly into a navigation system.

9. Method according to any of the preceding claims
**characterised in that**
the selected destination point is re-recorded by the interrogator directly into a navigation system.

10. Method according to any of the preceding claims
**characterised in that**
in the case of moving destination points their momentary stopping point is determined and updated by orientation and a call on the radiotelephone network.

11. Method according to Claim 7,
**characterised in that**
for accurate determination of the stopping point via the radiotelephone network, the coordinates of the stopping point and the destination point are determined by a GPS navigation device and communicated via the radiotelephone.

## Revendications

1. Procédé de commande de la circulation de transport et de voyageurs dans lequel les routes, optimisées sous des points de vue susceptibles d'être sélectionnés, entre le point de départ et le point de destination, sont déterminées à l'aide d'un ordinateur sur la base d'informations générales mémorisées, passant par des noeuds d'un réseau routier, et sont mises à disposition, des informations individuelles concernant l'accessibilité du point de destination exact depuis le point de départ et depuis les noeuds du réseau routier général étant collectées, mémorisés et actualisés,
caractérisé en ce que
ces informations individuelles sont utilisées conjointement pour l'optimisation par calcul de la route et le type de moyen de circulation à sélectionner, le point de destination exact étant sélectionné et proposé par l'ordinateur de manière correspondante à une spécification introduite par l'utilisateur.

2. Procédé selon la revendication 1, caractérisé en ce que les informations individuelles sont ajoutées de façon codée à une connaissance individuelle déjà existante de la destination.

3. Procédé selon la revendication 2, caractérisé en ce qu'on utilise comme identification existante le numéro de téléphone ou le numéro de télécopie.

4. Procédé selon la revendication 2, caractérisé en ce qu'on utilise comme identification existante l'adresse e-mail.

5. Procédé selon la revendication 2, caractérisé en ce qu'on utilise comme identification existante le code postal.

6. Procédé selon l'une des revendications précédentes, caractérisé en ce que le plan de route est effectué par un service en ligne, et en ce que la route, entre le point de départ exact et le point de destination exact, est déterminée par un ordinateur et est transmise à l'usager en faisant la demande, de façon réutilisable électroniquement ou en tant que copie papier ou par télécopie.

7. Procédé selon l'une des revendications précédentes, caractérisé en ce qu'on utilise pour déterminer la route optimale en plus la situation actuelle ou prévue de la circulation.

8. Procédé selon l'une des revendications précédentes, caractérisé en ce que le plan de route est directement développé sur un système de navigation pour l'usager en faisant la demande.

9. Procédé selon l'une des revendications précédentes, caractérisé en ce que le point de destination sélectionné est rajouté sur un système de navigation, à destination de l'usager en faisant la demande.

10. Procédé selon l'une des revendications précédentes, caractérisé en ce que, dans le cas où les points de destination sont mobiles, leur site de séjour momentané est déterminé et actualisé, par localisation où interrogation dans le réseau de radio-téléphone.

11. Procédé selon la revendication 7, caractérisé en ce que pour obtenir une détermination précise du lieu de séjour par l'intermédiaire du réseau de radio-téléphone, on détermine les coordonnées du lieu de séjour et du point de destination, par l'intermédiaire d'un appareil de navigation GPS, et on transmet par l'intermédiaire du radio-téléphone.
